# EUROPÄISCHE PATENTSCHRIFT

(11) **EP 1 164 162 B1**
(45) Veröffentlichungstag und Bekanntmachung des Hinweises auf die Patenterteilung: **15.06.2005**
(21) Anmeldenummer: 01112847.7
(22) Anmeldetag: 31.05.2001
(51) Int. Cl.: C08K 5/20, C08K 3/36, C08K 5/10, C08L 75/04, C08L 25/06, C08L 67/02, C08L 77/00

(54) **Thermoplastische Elastomer-Mischungen mit verbesserter Maschinengängigkeit bei der Extrusion**
Thermoplastic elastomer mixture with an improved processability in extrusion
Mélange d'élastomères thermoplastiques avec une aptitude au traitement par extrusion améliorée

(30) Priorität: 13.06.2000 DE 10029076
(43) Veröffentlichungstag der Anmeldung: 19.12.2001
(73) Patentinhaber: Wolff Walsrode Aktiengesellschaft, D-29655 Walsrode (DE)
(72) Erfinder: Schledjewski, Ralf, Dr., 67663 Kaiserslautern (DE); Funk, Hans-Werner, 29669 Bomlitz (DE); Schultze, Dirk, Dr., 40221 Düsseldorf (DE); Brandt, Rainer, Dr., 29664 Walsrode (DE)
(74) Vertreter: Pettrich, Klaus-Günter, Dr.

(56) Entgegenhaltungen:
- EP-A- 0 845 492
- EP-A- 0 900 812
- EP-A- 0 908 491
- EP-A- 1 029 890
- EP-A- 1 031 588
- WO-A-01/43935
- US-A- 4 581 387
- PATENT ABSTRACTS OF JAPAN vol. 008, no. 212 (C-244), 27. September 1984 (1984-09-27) & JP 59 098147 A (MITSUBISHI KASEI KOGYO KK), 6. Juni 1984 (1984-06-06)
- DATABASE WPI Section Ch, Week 199241 Derwent Publications Ltd., London, GB; Class A14, AN 1992-335439 XP002176220 & JP 04 239055 A (OKURA IND CO LTD), 26. August 1992 (1992-08-26)
- DATABASE WPI Section Ch, Week 198216 Derwent Publications Ltd., London, GB; Class A17, AN 1982-31920E XP002176221 & JP 57 043835 A (MITSUBISHI CHEM IND LTD) , 12. März 1982 (1982-03-12)

## Beschreibung

Diese Erfindung betrifft thermoplastische Elastomere, die mit Hilfe einer Kombination aus gut löslichen Wachsen und anorganischen Antiblockmitteln eine verbesserte Maschinengängigkeit bei der Extrusionsverarbeitung aufweisen.

Die Maschinengängigkeit von thermoplastischen Materialien bei der Extrusionsverarbeitung lässt sich über die konstruktive Auslegung der zum Aufschluss des Materials eingesetzten Werkzeuge beeinflussen. Eine Optimierung ist in der Regel nur in Abhängigkeit von spezifischen Rohstoffkennwerten des zu verarbeitenden Materials möglich. Bei der Verarbeitung von unterschiedlichen Materialien auf einer Extrusionseinrichtung kann diese nur in Ausnahmefällen eine optimierte Maschinengängigkeit bieten.

Der Aufschluss thermoplastischer Harze erfolgt beispielsweise in Schneckenwerkzeugen. Eine Übersicht über deren Aufbau bietet hier beispielsweise: Wortberg, Mehleke und Effen in: Kunststoffe, 84 (1994), S. 1131-1138, Pearson in: Mechanics of Polymer Processing, Elsevier Publishers, New York 1985, Fa. Davis-Standard in: Paper, Film & Foil Converter 64 (1990), S. 84-90. Werkzeuge zum Ausformen der Schmelze, beispielsweise zu schlauchförmigen Halbzeugen werden unter anderem beschrieben von: Michaeli in: Extrusionswerkzeuge, Hanser Verlag, München 1991.

Thermoplastische Elastomere stellen eine Gruppe von Materialien dar, deren wesentliches Kennzeichen die thermoplastische Verarbeitbarkeit kombiniert mit elastomeren Materialverhalten ist. Zur Gruppe der thermoplastischen Elastomere (TPE) gehören primär die Blockcopolymere. Dies sind neben den thermoplastischen Polyurethanen (TPE-U) die Styrol-basierenden Systeme (TPE-S), die Polyetherestertypen (TPE-E) und die Polyetherblockamide (TPE-A).

Aufgrund der thermoplastischen Verarbeitbarkeit lassen sich diese Materialien über einen Extrusionsprozeß aufschmelzen und mit Hilfe eines Werkzeuges beispielsweise zu einem Profil, eine Kabelummantelung oder einem schlauchförmigen Halbzeug verarbeiten. Folien auf Basis von TPE-E werden beispielsweise in US-A 5 859 083 beschrieben. Solche auf Basis von TPE-A in der EP-A 0 761 715. Extrusionsgeeignete TPE-S und deren Verwendung werden beispielsweise in DE-A 19 628 834 dargestellt. Halbzeuge aus TPE-U, Verfahren zu ihrer Herstellung sowie ihre Verwendung sind nach dem Stand der Technik beispielsweise aus der EP-A 0 308 683, der EP-A 0 526 858, der EP-A 0 571 868 oder der EP-A 0 603 680 bekannt. Ebenso ist die Herstellung von TPE-U-Halbzeugen unter Einsatz von im wesentlichen unverträglichen Polymeren als Mattierungsmittel in TPE-U z.B. in der DE-A 41 26 499 beschrieben. Eine Übersicht über die Gruppe der thermoplastischen Elastomere geben beispielsweise: Thermoplastic elastomers: a comprehensive review, ed. N.R. Legge, G. Holden and H.E. Schroeder, Carl Hanser Verlag, München, 1987 und Thermoplastische Elastomere - Herausforderung an die Elastomerverarbeiter, Hrsg.: VDI-Gesellschaft Kunststofftechnik, VDI Verlag, Düsseldorf, 1997.

Bei der thermoplastischen Verarbeitung von TPE können Hilfsmittel und Zusatzstoffe zum Einsatz kommen. Zu nennen sind hier beispielsweise Wachse, die als friktionsminderndes inneres und äußeres Gleitmittel dienen. Zusätzlich übernehmen Wachse die Aufgabe als Trennmittel, um ein Ankleben des Materials an das umgebende Material (z.B. das Werkzeug) zu verhindern. Außerdem kommen sie als Dispergatoren für anderen Zusatzstoffe, z.B. Pigmente oder Farbstoffe zum Einsatz.

In der Kunststoffverarbeitung eingesetzte Wachse sind beispielsweise Fettsäureamide, z.B. Stearylamide und Ölsäureamide, Fettsäureester, z.B. Montansäureester und Stearinsäureester, oder auch Polyethylenwachse. Eine eingehendere Übersicht zu diesem Thema vermittelt: Taschenbuch der Kunststoff-Additive, Hrsg. R. Gächter, H. Müller, Hanser Verlag, München, Wien, 1979, S. 229ff.

Die speziellen Verarbeitungs- und Gebrauchstemperaturen verschiedener Thermoplaste sowie unterschiedliche chemische Reaktionsfähigkeit führen dazu, dass sich nicht alle Wachse gleichwertig einsetzen lassen. Für TPE-U werden beispielsweise im wesentlichen Amidwachse verwendet. Diese zeigen eine hohe Migrationsneigung, wodurch sich eine sehr gute Trennwirkung ergibt. Die Gleitmittelwirkung dieser Wachse ist hingegen schwach ausgeprägt. Gute Gleitmitteleigenschaften weisen in TPE-U beispielsweise Montanesterwachse auf (EP-A 0 308 683; EP-A 0 670 339). Deren Trennwirkung ist allerdings auch bei hohen Konzentrationen unzureichend. Eine Reduktion der inneren und äußeren Friktion bei der Schmelzeverarbeitung kann bei einem TPE-U beispielsweise auch durch Einsatz von 0,2 bis 5 Gew.-% mindestens eines Polyolefins oder Polystyrols erzielt werden (US-A 3358 052).

Für die Herstellung flächenhafter Halbzeuge ist insbesondere die Verwendung von Antiblockmitteln als Zusatzstoff von Bedeutung. Durch deren Einsatz wird beispielsweise eine Oberflächentopografie erzeugt, die bei der Weiterverarbeitung, weniger bei der schmelzeverarbeitenden Formgebung (z.B. Folienherstellung), ein Zuammenbacken flächiger Kunststoffgegenstände verhindert. Zum Einsatz kommen hier beispielsweise natürliche oder synthetische Kieselsäuren. Bekannt sind auch Zusätze aus unverträglichen thermoplastischen Materialien wie z.B. Polyolefine oder auch Polystyrol in TPE-U (DE-A-41 26 499).

Es stellte sich die Aufgabe die Maschinengängigkeit bei der Extrusions-Verarbeitung von thermoplastischen Elastomeren unabhängig von der konstruktiven Gestaltung der Extrusionseinrichtung zu verbessern.

Erfindungsgemäß gelang es, eine den genannten Anforderungen genügende Mischung bereitzustellen, die mindestens ein thermoplastisches Elastomer enthält und dadurch gekennzeichnet ist, dass sie mindestens
a) 0,05 bis 1,5 Gew.-% bezogen auf die Gesamtmischung eines Fettsäureamidester-Wachses aus der Gruppe Erucasäureamidethylerucat, Ölsäureamidethylstearat, Stearylsäureamidethylstearat, Stearylsäureamidbutylstearat, Stearylsäureamidethyloleat, Cerotinsäureamidethylcertat und
b) 0,5 bis 10 Gew.-% bezogen auf die Gesamtmischung einer natürlichen und/oder synthetischen Kieselsäure
enthält.

Überraschenderweise wird die Maschinengängigkeit bei der Extrusionsverarbeitung eines thermoplastischen Elastomers durch die erfindungsgemäße Mischung deutlich verbessert. Deutlich wird dies durch eine verbeserte Fließfähigkeit der Schmelze, die sich durch eine reduzierte Leistungsaufnahme der Extrusionseinrichtung gekoppelt mit einem gleichzeitig erhöhten Massedurchsatz darstellt.

In einer bevorzugten Ausführung der Mischung kommt als zusätzlich Komponente ein Montanwachs zum Einsatz. Der Anteil dieser Komponente liegt erfindungsgemäß zwischen 0 und 1 Gew.-% bezogen auf die Gesamtmischung. In einer besonders bevorzugten Ausführung ist bei dem verwendeten Montanwachs die Montansäure teilweise durch Butylenglycol verestert und der Rest mit Calciumhydroxid verseift.

Erfindungsgemäß enthält die Mischung mindestens ein thermoplastisches Elastomer, in einer bevorzugten Variante handelt es sich bei dem thermoplastischen Elastomer um ein Blockcopolymer wie beispielsweise Copolyetherester oder Polyetherblockamide.

In einer besonders bevorzugten Ausführung wird als basierendes thermoplastisches Elastomer mindestens ein thermoplastisches Polyurethan verwendet. Vorzugsweise ein überwiegend lineares thermoplastisches Polyurethanelastomer, dessen längerkettige Diolkomponente ein Polyester oder Polyether ist, und das eine Shore-Härte von vorzugsweise 70 bis 95 A, besonders bevorzugt 85 bis 95 A, bestimmt nach DIN 53505, aufweist.

Geeignete thermoplastische Polyether- oder Polyester-Polyurethan-Elastomere und/oder Mischungen derselben können beispielsweise durch die bekannten Batch- und/oder teil- und/oder vollkontinuierlichen Verfahren, insbesondere aber durch Umsetzung in einem Schneckenwerkzeug von
a) organischen, vorzugsweise aromatischen oder cycloaliphatischen Diisocyanaten,
b) polymeren Diolen mit Molekulargewichten von bevorzugt 500 bis 8000,
c) Kettenverlängerungskomponenten mit Molekulargewichten von vorzugsweise 60 bis 400 in Gegenwart von gegebenenfalls
d) Katalysatoren sowie
e) Hilfsstoffen und/oder Zusätzen
hergestellt werden.

Über die verwendbaren Komponenten a) bis e) lässt sich folgendes ausführen:
a) Als organische Diisocyanate (a) kommen vorzugsweise aromatische oder cycloaliphatische Diisocyanate in Betracht. Im Einzelnen seien beispielhaft genannt: aromatische Diisocyanate, wie 2,4- und 2,6-Toluylen-Diisocyanat, 4,4'-, 2,4'- und 2,2'-Diphenylmethan-Diisocyanat oder Gemische daraus, cycloaliphatische Diisocyanate, wie Isophoron-Diisocyanat, 1,4-Cyclo-hexan-Diisocyanat sowie 4,4'-, 2,4'- und 2,2'-Dicyclohexylmethan-Diisocyanat oder Gemische daraus.
b) Als höhermolekulare Diolverbindungen (b) mit bevorzugten Molekulargewichten von 400 bis 8000 eignen sich vorzugsweise linear aufgebaute Moleküle mit einer niedrigen Glas- oder Erweichungstemperatur. Hierzu zählen die Polyetherole und Polyesterole. In Betracht kommen aber auch hydroxylgruppenhaltige Polymere, beispielsweise Polyacetale, wie Polyoxymethylene und vor allem wasserunlösliche Formale und aliphatische Polycarbonate, insbesondere solche aus Diphenylcarbonat und Hexandiol-1,6, hergestellt durch Umesterung. Außerdem kommen hydroxylgruppenverkappte Diolverbindungen aus Polyolefinen, insbesondere aliphatische hydroxylgruppenverkappte Copolymere aus Ethylen und Butylen, in Betracht. Die Diolverbindungen müssen zumindest überwiegend linear, d.h. im Sinne der Isocyanatreaktion difunktionell augebaut sein. Die genannten Diolverbindungen können als Einzelkomponenten oder in Form von Mischungen zur Anwendung kommen.
c) Als Kettenverlängerungsmittel mit Molekulargewichten von 60 bis 400, vorzugsweise 60 bis 300, kommen bevorzugt Alkandiole mit 2 bis 12 Kohlenstoffatomen, vorzugsweise mit 2,4 oder 6 Kohlenstoffatomen, wie z.B. Ethandiol, Hexandiol-1,6, und insbesondere Butandiol-1,4 und Dialkylenetherglycole wie z.B. Diethylenglycol und Dipropylenglycol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4, Hydroxyalkylenether des Hydrochinons, (cyclo)-aliphatische Diamine, wie z.B. Isophorondiamin, Ethylendiamin und aromatische Diamine, wie z.B. 2,4- und 2,6-Toluylendiamin.
d) Geeignete Katalysatoren, welche insbesondere die Reaktion zwischen den Isocyanatgruppen der Kategorie a) und den Hydroxylgruppen der Kategorien b) und c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicylo(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctat, Zinndilaurat oder die Zinndialkylsalze aliphatischer Carbonsäuren wie Dibutyl-Zinndiacetat, Dibutylzinndilaurat oder ähnliche. Die Katalysatoren werden üblicherweise in Mengen von 0,001 bis 0,2 Teilen pro 100 Teile Hydroxylverbindung b) eingesetzt.
e) Neben Katalysatoren können den Aufbaukomponenten a) bis c) auch Hilfsmittel und/oder Zusatzstoffe e) beigegeben sein. Genannt seien beispielsweise Gleitmittel, Inhibitoren, Stabilisatoren gegen Hydrolyse, Licht, Hitze, Oxidation oder Verfärbung, Farbstoffe, Pigmente, anorganische und/oder organische Füllstoffe, Verstärkungsmittel und niedermolekulare Weichmacher.

Geeignete thermoplastische Polyurethane sind beispielsweise unter den Handelsnamen Desmopan, Elastollan, Estane, Morthane, Pellethane, Pearlthane, Skythane, Tecoflex oder Texin erhältlich.

Eine geeignete Ausführung der erfindungsgemäßen Mischungen enthält zusätzlich gebräuchliche Additive aus der Gruppe umfassend:
I. Antiblockmittel, anorganische oder organische Abstandshalter,
II. Gleit- oder Entformungsmittel,
III. Pigmente oder Füllstoffe und
IV. Stabilisatoren.

Der Anteil der genannten Additive I bis IV liegt in Summe bevorzugt zwischen 0 und 30 %.

Die gebräuchlichen Additive, die in den erfindungsgemäßen Mischungen enthalten sein können, sind beispielsweise bei Gächter und Müller beschrieben in: Kunststoff-Additive, Carl Hanser Verlag München (1979).

Die erfindungsgemäßen Mischungen verbessern die Maschinengängigkeit bei der Extrusionsverarbeitung. Besonders wirkungsvoll zeigen sich die erfindungsgemäßen Mischungen bei der Verarbeitung in Formgebungswerkzeugen mit einem großen Verhältnis von Oberfläche zu Querschnitt des erzeugten Produktes, wie beispielsweise bei der Folienextrusion.

Die aus den erfindungsgemäßen Mischungen hergestellten Bauteile können mit den bekannten physikalischen und chemischen Behandlungsmethoden wie beispielsweise der Corona-Behandlung ein- oder beidseitig in ihren Oberflächeneigenschaften modifiziert werden.

### Beispiele

Die im Rahmen der nachfolgenden Beispiele und Vergleichsbeispiele beschriebenen Mischungen wurden auf einem Einschneckenextruder mit D = 60 mm mit einer Dreizonenschnecke, L/D = 25, mit kombinierten Scher- und Mischteil verarbeitet. Der Extruderzylinder war in 5 Zonen temperierbar. Sowohl die Temperierung am Extruder als auch die Einstellungen am nachgeschalteten Messwerkzeug wurden konstant gehalten.

Die Beispiele wurden an einem Ester-TPE-U der Shore-A-Härte 86, gemessen nach DIN 53505, entsprechend einer Härte von 36 Shore-D und einer Melt Volume Rate (MVR) von 26 cm³/10 min, gemessen nach DIN ISO 1133 bei 200°C und 10,0 kg ermittelt.

### Als weitere Mischungsbestandteile kamen zum Einsatz:

| | | | |
|---|---|---|---|
| Wachs 1 | W1 | Stearylsäureamidethylstearat | (Abril Paradigm Wax 77) |
| Wachs 2 | W2 | teilweise mit Ca verseiftes Butylmontanat | (Hoechstwachs OP) |
| Wachs 3 | W3 | Ethylenbisstearylamid | (Hoechstwachs C) |
| Antiblock 1 | A1 | natürliche Kieselsäure | (Superfloss E) |

Der Extruder wurde mit konstanter Drehzahl, 38 Umdrehungen pro Minute, betrieben. Gemessen wurden dabei die Stromaufnahme des Extruders, der Massedurchsatz und die Gleichmäßigkeit des extrudierten Materialstranges.

| Beispiel | Additiv | Anteil [Gew.-%] | Stromaufnahme [A] | Durchsatz [kg/h] | Gleichmäßigkeit des Extrudats |
|---|---|---|---|---|---|
| 1 | W1 | 0,7 | 42 | 60 | gleichmäßig |
| | W2 | 0,1 | | | |
| | A1 | 3,5 | | | |
| 2 | W1 | 0,8 | 45 | 55 | gleichmäßig |
| | A1 | 3,5 | | | |
| 3 | W1 | 0,7 | 45 | 50 | ungleichmäßig |
| | W2 | 0,1 | | | |
| 4 | W1 | 0,4 | 48 | 54 | gleichmäßig |
| | A1 | 3,5 | | | |
| 5 | W3 | 0,7 | 54 | 50 | gleichmäßig |
| | A1 | 4,0 | | | |

Beispiel 1 und 2 belegen die hervorragende Maschinengängigkeit der erfindungsgemäßen Mischung. Die positive Wirkung der erfindungsgemäß beanspruchten Gegenwart von Kieselsäure auf die Gleichmäßigkeit des Extrudats wird durch Beispiel 3 gezeigt. Die Sensitivität in Bezug auf die Mischungsabstimmung macht Beispiel 4 deutlich. Der Vergleich von Beispiel 1, 2 und 4 mit dem Vergleichsbeispiel 5 dokumentiert den durch die erfindungsgemäße Mischung zu erzielenden Vorteil bezüglich der Maschinengängigkeit. Vergleichsbeispiel 5 erfordert nicht nur den mit Abstand höchsten energetischen Aufwand, sondern resultiert dabei auch im niedrigsten Massedurchsatz.

## Patentansprüche

1. Thermoplastisch verarbeitbare Mischung aus mindestens einem thermoplastischen Elastomeren, **dadurch gekennzeichnet, dass** die Mischung mindestens
a) 0,05 bis 1,5 Gew.-%, bezogen auf die Gesamtmischung, eines Fettsäureamidester-Wachses, aus der Gruppe Erucasäureamidethylerucat, Ölsäureamidethylstearat, Stearylsäureamidethylstearat, Stearylsäureamidbutylstearat, Stearylsäureamidethyloleat, Cerotinsäureamidethylcertat,
b) 0,5 bis 10 Gew.-%, bezogen auf die Gesamtmischung, einer natürlichen und/oder synthetischen Kieselsäure und
c) 0 bis 1 Gew.-%, bezogen auf die Gesamtmischung eines Montanwachses
enthält.

2. Mischung nach Anspruch 1, **dadurch gekennzeichnet, dass** sie ein thermoplastisches Elastomer aus der Gruppe der thermoplastischen Polyurethane, Polystyrole, Polyetherester, Polyetherblockamide enthält.

3. Mischung nach einem der Ansprüche 1 bis 2, **dadurch gekennzeichnet, dass** bei dem Montanwachs die Montansäure teilweise mit Butylenglykol verestert ist und der Rest mit Calciumhydroxid verseift ist.

4. Mischung nach einem der vorhergehenden Ansprüche, **dadurch gekennzeichnet, dass** das thermoplastische Elastomer ein Blockcopolymer ist.

5. Mischung nach einem der vorhergehenden Ansprüche, **dadurch gekennzeichnet, dass** das thermoplastische Elastomer ein Copolyetherester ist.

6. Mischung nach einem der Ansprüche 1 bis 4, **dadurch gekennzeichnet, dass** das thermoplastische Elastomer ein Polyetherblockamid ist.

7. Mischung nach einem der Ansprüche 1 bis 4, **dadurch gekennzeichnet, dass** das thermoplastische Elastomer ein thermoplastisches Polyurethanelastomer ist.

8. Mischung nach einem der vorhergehenden Ansprüche, **dadurch gekennzeichnet, dass** die Komponenten a), b) und c) über ein Konzentrat in die Mischung eingebracht werden.

9. Verwendung einer Mischung, enthaltend
a) 0,05 bis 1,5 Gew.-%, bezogen auf die Gesamtmischung, eines Fettsäureamidester-Wachses, aus der Gruppe Erucasäureamidethylerucat, Ölsäureamidethylstearat, Stearylsäureamidethylstearat, Stearylsäureamidbutylstearat, Stearylsäureamidethyloleat, Cerotinsäureamidethylcertat,
b) 0,5 bis 10 Gew.-%, bezogen auf die Gesamtmischung, einer natürlichen und/oder synthetischen Kieselsäure und
c) 0 bis 1 Gew.-%, bezogen auf die Gesamtmischung eines Montanwachses,
zur Verbesserung der Extrusionsverarbeitung thermoplastischer Elastomere

10. Verwendung nach Anspruch 9, **dadurch gekennzeichnet, dass** das thermoplastischeElastomer zu einem schlauchförmigen Halbzeug ausgeformt wird.

## Claims

1. A thermoplastic processable mixture consisting of at least one thermoplastic elastomer, **characterised in that** the mixture contains at least
a) 0.05 to 1.5 wt.%, with respect to the entire mixture, of a fatty acid amide ester wax from the group consisting of erucic amide ethyl erucate, oleic amide ethyl stearate, stearic amide ethyl stearate, stearic amide butyl stearate, stearic amide ethyl oleate, cerotic amide ethyl cerotate,
b) 0.5 to 10 wt.%, with respect to the entire mixture, of a natural and/or synthetic silica and
c) 0 to 1 wt.%, with respect to the entire mixture of a montan wax.

2. A mixture according to Claim 1, **characterised in that** it contains a thermoplastic elastomer from the group of thermoplastic polyurethanes, polystyrenes, polyetheresters, polyether block amides.

3. A mixture according to one of Claims 1 to 2, **characterised in that** in the case of montan wax, some of the montanic acid is esterified with butylene glycol and the remainder is saponified with calcium hydroxide.

4. A mixture according to one of the preceding Claims, **characterised in that** the thermoplastic elastomer is a block copolymer.

5. A mixture according to one of the preceding Claims, **characterised in that** the thermoplastic elastomer is a copolyetherester.

6. A mixture according to one of Claims 1 to 4, **characterised in that** the thermoplastic elastomer is a polyether block amide.

7. A mixture according to one of Claims 1 to 4, **characterised in that** the thermoplastic elastomer is a thermoplastic polyurethane elastomer.

8. A mixture according to one of the preceding Claims, **characterised in that** components a), b) and c) are incorporated into the mixture via a concentrate.

9. Use of a mixture containing
a) 0.05 to 1.5 wt.%, with respect to the entire mixture, of a fatty acid amide ester wax from the group consisting of erucic amide ethyl erucate, oleic amide ethyl stearate, stearic amide ethyl stearate, stearic amide butyl stearate, stearic amide ethyl oleate, cerotic amide ethyl cerotate,
b) 0.5 bis 10 wt.%, with respect to the entire mixture, of a natural and/or synthetic silica and
c) 0 to 1 wt.%, with respect to the entire mixture of a montan wax,
to improve the extrusion processing of thermoplastic elastomers.

10. Use according to Claim 9, **characterised in that** the thermoplastic elastomer is extruded to give a tubular semi-finished product.

## Revendications

1. Mélange thermoplastiquement transformable constitué d'au moins un élastomère thermoplastique, **caractérisé en ce que** le mélange contient au moins
a) de 0,05 à 1,5 % en poids, rapportés au mélange total, d'un ester d'amide d'acide gras-cire choisi parmi l'éthyléruçate d'amide d'acide érucique, l'éthylstéarate d'amide d'acide oléique, l'éthylstéarate d'amide d'acide stéarylique, le butylstéarate d'amide d'acide stéarylique, l'éthyloléate d'amide d'acide stéarylique, l'éthylcérotate d'amide d'acide cérotique,
b) de 0,5 à 10 % en poids, rapportés au mélange total, d'un acide silicique naturel et/ou synthétique et
c) de 0 à 1 % en poids, rapporté au mélange total, d'une cire de lignite.

2. Mélange selon la revendication 1, **caractérisé en ce qu'**il contient un élastomère thermoplastique choisi parmi des polyuréthanes thermoplastiques, des polystyrènes, des polyétheresters, des amides à séquence polyéther.

3. Mélange selon l'une quelconque des revendications 1 à 2, **caractérisé en ce que** pour la cire de lignite, l'acide montanique est partiellement estérifié avec du butylèneglycol et le reste est saponifié avec de l'hydroxyde de calcium.

4. Mélange selon l'une quelconque des revendications précédentes, **caractérisé en ce que** l'élastomère thermoplastique est un copolymère séquencé.

5. Mélange selon l'une quelconque des revendications précédentes, **caractérisé en ce que** l'élastomère thermoplastique est un copolyétherester.

6. Mélange selon l'une quelconque des revendications 1 à 4, **caractérisé en ce que** l'élastomère thermoplastique est un amide à séquence polyéther.

7. Mélange selon l'une quelconque des revendications 1 à 4, **caractérisé en ce que** l'élastomère thermoplastique est un élastomère de polyuréthane thermoplastique.

8. Mélange selon l'une quelconque des revendications précédentes, **caractérisé en ce que** les constituants a), b) et c) sont introduits dans le mélange par l'intermédiaire d'un concentré.

9. Utilisation d'un mélange contenant
a) de 0,05 à 1,5 % en poids, rapportés au mélange total, d'un ester d'amide d'acide gras-cire choisi parmi l'éthyléruçate d'amide d'acide érucique, l'éthylstéarate d'amide d'acide oléique, l'éthylstéarate d'amide d'acide stéarylique, le butylstéarate d'amide d'acide stéarylique, l'éthyloléate d'amide d'acide stéarylique, l'éthylcérotate d'amide d'acide cérotique,
b) de 0,5 à 10 % en poids, rapportés au mélange total, d'un acide silicique naturel et/ou synthétique et
c) de 0 à 1 % en poids rapporté au mélange total, d'une cire de lignite,
pour l'amélioration de la transformation par extrusion d'élastomères thermoplastiques.

10. Utilisation selon la revendication 9, **caractérisée en ce que** l'élastomère thermoplastique est façonné en un semi-produit en forme de tuyau.
